(19) Europäisches Patentamt
European Patent Office
Office européen des brevets

(11) **EP 3 200 377 A1**

(12) **EUROPEAN PATENT APPLICATION**
published in accordance with Art. 153(4) EPC

(43) Date of publication:
**02.08.2017 Bulletin 2017/31**

(51) Int Cl.:
***H04L 1/16*** (2006.01)

(21) Application number: **15845300.1**

(86) International application number:
**PCT/CN2015/089686**

(22) Date of filing: **16.09.2015**

(87) International publication number:
**WO 2016/045527 (31.03.2016 Gazette 2016/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **24.09.2014 CN 201410491281**

(71) Applicant: **Shanghai Langbo Communication Technology Company Limited**
**Shanghai 200240 (CN)**

(72) Inventor: **ZHANG, Xiaobo**
**Shanghai 200240 (CN)**

(74) Representative: **Friese Goeden Patentanwälte PartGmbB**
**Widenmayerstraße 49**
**80538 München (DE)**

(54) **METHOD AND DEVICE FOR 3D MIMO COMMUNICATION IN UE AND BASE STATION**

(57) The present invention provides a method and device for 3D MIMO communication in a UE and a base station. In an embodiment, in a first step, a UE receives a downlink reference signal in a first RS resource and a second RS resource; in a second step, the UE determines a target RS resource, wherein the target RS resource is the first RS resource or the second RS resource; and in a third step, the UE feeds back a first CI and a first index, wherein the first RS resource comprises N1 RS ports, the second RS resource comprises N2 RS ports, a reference RS of the first CI is the target RS resource, the first index indicates the target RS resource, N1 is a positive integer greater than 1, and N2 is a positive integer greater than 1. By using the technical scheme provided in the present invention, a UE feeds back the most effective CI information by using limited air-interface resources, and therefore overheads of the air-interface resources are reduced or the feedback efficiency of the CI is improved.

FIG. 6

## Description

## BACKGROUND

### Technical Field

The present invention is related to a scheme for feedbacking the channel information in the mobile communication technique field, and more particular to a scheme for feedbacking the downlink channel information in the mobile communication system adopting FD (Full Dimension) MIMO (Multiple Input Multiple Output) technique.

### Related Art

In the traditional 3GPP (3rd Generation Partner Project) LTE (Long Term Evolution) system, the CA served as one of key techniques is introduced, CSI (Channel Status Information) feedback of MIMO channel mainly has two manners.

- Feedbacking Implicit CSI

A UE (User Equipment) detects a CRS (Cell specific Reference Signal) or a CSI-RS (CSI Reference Signal) to obtain a CIR (Channel Impulse Response) and map it as an implicit CSI. The implicit CSI includes the information of a PMI (Precoding Matrix Indicator), a CQI (Channel Quality Indicator), etc. A system side obtains a MIMO downlink channel parameter through the implicit CSI fed back by the UE.

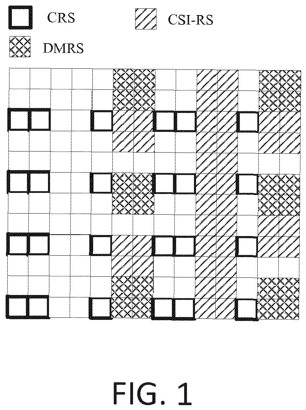

FIG. 1 is a CSI-RS pattern inside a PRBP (Physical Resource Block Pair) based on a normal CP (Cyclic Prefix) in an existing LTE system and CRS and DRMS (Demodulation Reference Signal) are identified at the same time, wherein a small square is a minimum resource unit of the LTE - RE (Resource Element). RE identified by a slash may be used for transmitting the CSI-RS. The LTE system adopts a port concept to define a RS resource: one RS port may be mapped to one physical antenna, or a plurality of physical antennas may be combined and superposed to form one virtual antenna. The LTE defines four numbers of CSI-RS port: 1, 2, 4, 8.

The implicit CSI is applicable for a FDD (Frequency Duplex Division) system and a TDD (Time Duplex Division) system.

- Feedbacking Uplink SRS (Sounding Reference Signal)

The UE transmits an uplink SRS. The system side demodulates the SRS to obtain an uplink channel CSI, and then obtains a downlink CSI according to a link reciprocity. The method is mainly used for the TDD system.

As a new cellular network antenna architecture, Massive MIMO has recently become a hot topic. A typical feature of the Massive MIMO system is that the amount of the antenna array unit is increased to a larger value to obtain a series of gain. For example, the system capacity theoretically continues to increase with the increase of the antenna number; the coherent superposition of the transmitting antenna signal decreases a transmitting power. A challenge faced by the Massive MIMO is how to ensure that a transmitting terminal accurately obtains the channel status indicator (CSI) information.

At present, the research related to the Massive MIMO is based on the TDD system, i.e. the system side obtains the downlink CSI by using the SRS and the link reciprocity. Considering a practical scenario deployment, there are still problems to be solved as follows.

As a new cellular network antenna architecture, Massive MIMO has recently become a hot topic. A typical feature of the Massive MIMO system is that the amount of the antenna array unit is increased to a larger value to obtain a series of gain, for example, a system capacity theoretically continues to increase with the increase of antenna number; the coherent superposition of the transmitting antenna signal decreases a transmitting power. The 3GPP R (Release) 12 develops a 3D (Dimension) MIMO channel model. In the 65th plenary of RAN (Radio Access Network), FD-MIMO was approved as a research topic for 3GPP R13. The FD-MIMO research maximally reaches a scenario with sixty-four physical antennas.

A challenge faced by the FD-MIMO is how to ensure that a base station equipment accurately obtains the downlink CSI. At present, the research related to the Massive MIMO is based on the TDD system, i.e. the system side obtains the downlink CSI by using the SRS and the link reciprocity Considering a limitation of the SRS (for example, difficulty to be applied by FDD, an non-reciprocity of a radio frequency link, SRS pilot pollution, limited SRS resource, etc.), the implicit CSI may still play an important role in the Massive MIMO transmission. For the FD-MIMO, if the UE directly feeds back the CSI of all of the physical antennas, the arisen air-interface overhead is almost unacceptable when the antenna number is larger.

For the above problem, the present invention discloses a method and a device for feedbacking CSI in a FD MIMO system.

## SUMMARY

The present invention discloses a method for 3D MIMO communication in a UE, which includes the following steps:

Step A: receiving a downlink reference signal in a first RS resource and a second RS resource;

Step B: determining a target RS resource, wherein the target RS resource is the first RS resource or the second RS resource;

Step C: feeding back a first CI (codebook index) and a first index;

wherein the first RS resource includes N1 RS ports, the second RS resource includes N2 RS ports, a reference RS of the first CI is the target RS resource, the first index indicates the target RS resource, N1 is a positive integer greater than 1, and N2 is a positive integer greater than 1.

The UE performs a channel estimation to obtain a corresponding channel parameter according the reference RS, thereby determining a corresponding CI. The essence of the above method is that the UE itself may select the RS resource corresponding the feedbacked CI, and feed back a more effective downlink CSI by using a given uplink transmission resource. In one embodiment, the first RS resource and the second RS resource are respectively correspond to an antenna array in a horizontal direction and an antenna array in a vertical direction.

A specific embodiment of the Step B is implementation related, i.e. self determinated by the UE. In one embodiment, the UE compares a No.1 CI based on the first RS resource with a No.2 CI based on the second RS resource. The UE determines a RS resource corresponding to the less accurate one of No.1 CI and the No.2 CI as the target RS resource according to the latest received first RS resource and second RS resource.

In one embodiment, the N1 and the N2 are four, a codebook space of the first CI is a codebook space of 4Tx (the transmitting antenna port) in the LTE. In one embodiment, the N1 and the N2 are eight, a codebook space of the first CI is a codebook space corresponding to a first PMI of 8Tx in the LTE. In one embodiment, the N1 is equal to the N2.

In one embodiment, the first CI and the first index are transmitted in the same PUCCH (physical uplink control channel) of the same sub frame.

Specifically, according to an aspect of the present invention, the Step C includes the following step:

Step C0: feeding back a first CQI;

wherein the first CQI is determined under a condition that the UE assumes that a PMI value corresponding to the CI in a reported CI set is adopted by a base station, and a reference RS of the first CQI includes the first RS resource and the second RS resource. The reported CI set includes the first CI and a second CI. The second CI is a latest CI fed back by the UE, the reference RS of which is a RS resource in {the first RS resource, the second RS resource} and other than the target RS resource.

In one embodiment, the N1 is four, the N2 is eight, and a codebook space of the first CI is a codebook space of 4Tx in the LTE. In one embodiment, a codebook space of the second CI is a codebook space of 4Tx in the LTE. In one embodiment, the N1 and the N2 are eight, a codebook space of the first CI is a codebook space corresponding the first PMI of 8Tx in the LTE, and a codebook space of the second CI is a codebook space corresponding to the first PMI of 8Tx in the LTE.

In one embodiment of the Step B:

- the UE determines a first testing CI for a CSI reference resource (i.e. a time frequency resource associated with the CSI) according to the first RS resource, and the UE assumes that a base station adopt PMI values corresponding to the first testing CI and a second testing CI to calculate a first testing CQI, wherein the second testing CI is a latest CI fed back by the UE according to the second RS resource. The UE determines a third testing CI for the CSI reference resource according to the second RS resource, and the UE assume that the base station adopts PMI values corresponding to the third testing CI and a fourth testing CI to calculate a second testing CQI, wherein the fourth testing CI is a latest CI fed back by the UE according to the first RS resource. If the first testing CQI is greater than the second testing CQI, the target RS resource is the first RS resource; if the first testing CQI is less than the second testing CQI, the target RS resource is the second RS resource; if the first testing CQI is equal to the second testing CQI, the target RS resource is any one of the first RS resource and the second RS resource.

Specifically, according to an aspect of the present invention, the Step A includes the following step:

Step A1: receiving an uplink scheduling DCI (downlink control information), wherein the uplink scheduling DCI includes a CSI scheduling bit.

The Step C further includes the following step:

Step C1: transmitting a A(aperiodic)-CSI on a PUSCH (physical uplink shared channel);

wherein the CSI scheduling bit indicates one of the first RS resource and the second RS resource, a reference RS of the A-CSI is a RS resource indicated by the CSI scheduling bit; the A-CSI includes at least one of {CI, CQI}.

The PUSCH is scheduled by the uplink scheduling DCI. In one embodiment, the uplink scheduling DCI is one of DCI formats {0, 4}. In one embodiment, the cell information of the A-CSI is configured by a CSI request bit in the uplink scheduling CSI in accordance with a method of the LTE.

Specifically, according to an aspect of the present invention, the Step C further includes the following step:

Step C2: feeding back a third CI;

wherein the reported CI set includes the third CI, and the third CI is determined under a condition that the UE assumes that PMI values corresponding to the first CI and the second CI are adopted by the base station.

In one embodiment, a reference RS of the third CI includes the first RS resource and the second RS resource.

In one embodiment, a reference RS of the third CI is the target RS resource.

Specifically, according to an aspect of the present invention, transmitting resources of the first CI and the second CI are orthogonal on a time domain (i.e. located on different sub frames). The first CI and the second CI occupy the same PUCCH resource in a sub frame. The second CI is a latest CI fed back by the UE, the reference RS of which is a RS resource in {the first RS resource, a second RS resource} and other than the target RS resource.

In one embodiment, a PUCCH resource for transmitting the first CI and a PUCCH resource for transmitting the second CI is configured by the same *PUCCH-ConfigDedicated* IE (information element).

Specifically, according to an aspect of the present invention, the first index is one bit, and the first index identifies that the target RS resource is the first RS resource or the second RS resource.

Specifically, according to an aspect of the present invention, a pattern of the RS port inside a PRBP is a pattern of a CSI-RS port inside the PRBP.

The present invention discloses a method for 3D MIMO communication in a base station, which includes the following steps:

> Step A: transmitting a downlink reference signal in a first RS resource and a second RS resource;
>
> Step B: receiving a first CI and a first index;
>
> Step C: determining a downlink channel parameter;

wherein the first RS resource includes N1 RS ports, the second RS resource includes N2 RS ports, N1 is a positive integer greater than 1, and N2 is a positive integer greater than 1. A reference RS of the first CI is the target RS resource, the target RS resource is the first RS resource or the second RS resource, and the first index indicates the target RS resource.

In one embodiment of the Step C, the base station recovers a relative phase between the antenna ports of a downlink channel according to the first CI and a second CI. The second CI is a latest CI fed back by the UE, the reference RS of which is a RS resource in {the first RS resource, the second RS resource} and other than the target RS resource.

In one embodiment, the N1 is one of {1, 2, 4, 8}, and the N2 is one of {1, 2, 4, 8}. The first RS resource occupies a time, frequency and code domain resource of one set of N1 CSI-RS ports, and the second RS resource occupies a time, frequency and code domain resource of one set of N2 CSI-RS ports.

Specifically, according to an aspect of the present invention, the Step B includes the following steps:

> Step B0: receiving a first CQI;

wherein the first CQI is determined under a condition that a transmitting UE assumes that a PMI value corresponding to the CI in a reported CI set is adopted by the base station, and a reference RS of the first CQI includes the first RS resource and the second RS resource. The reported CI set includes the first CI and a second CI. The second CI is a latest CI fed back by the transmitting UE, the reference RS of which is a RS resource in {the first RS resource, the second RS resource} and other than the target RS resource.

In one embodiment of the Step C, the base station recovers an amplitude of a downlink channel according to the first CI, and recovers a relative phase between the antenna ports of the downlink channel according to the first CI and the second CI.

Specifically, according to an aspect of the present invention, the Step A includes the following step:

> Step A1: transmitting an uplink scheduling DCI, wherein the uplink scheduling DCI includes a CSI scheduling bit.

The Step B further includes the following step:

> Step B1: receiving an A-CSI on a PUSCH;

wherein the CSI scheduling bit indicates one of the first RS resource and the second RS resource, a reference RS of the A-CSI is a RS resource indicated by the CSI scheduling bit; the A-CSI includes at least one of {CI, CQI}.

Specifically, according to an aspect of the present invention, the Step B further includes the following step:

> Step B 2: receiving a third CI;

wherein the reported CI set includes the third CI, and the third CI is determined under a condition that the UE assumes that PMI values corresponding to the first CI and the second CI are adopted by the base station.

In one embodiment, the N1 and the N2 are eight, a codebook space of the first CI is a codebook space corresponding to a first PMI of 8Tx in the LTE, and a codebook space of the second CI is a codebook space corresponding to a first PMI of 8Tx in the LTE.

Specifically, according to an aspect of the present invention, transmitting resources of the first CI and the second CI are orthogonal on a time domain. The first CI and the second CI occupy the same PUCCH resource in a sub frame. The second CI is a latest CI fed back by the transmitting UE, the reference RS of which is a RS resource in {the first RS resource, a second RS resource} and other than the target RS resource.

Specifically, according to an aspect of the present invention, the first index is one bit, and the first index identifies that the target RS resource is the first RS resource or the second RS resource.

Specifically, according to an aspect of the present invention, a pattern of the RS port inside a PRBP is a pattern of a CSI-RS port inside the PRBP.

The present invention discloses a user equipment, and the user equipment includes:

a first module, for receiving a downlink reference signal in a first RS resource and a second RS resource;

a second module, for determining a target RS resource, wherein the target RS resource is the first RS resource or the second RS resource;

a third module, for feeding back a first CI and a first index;

wherein the first RS resource includes N1 RS ports, the second RS resource includes N2 RS ports, a reference RS of the first CI is the target RS resource, the first index indicates the target RS resource, N1 is a positive integer greater than 1, and N2 is a positive integer greater than 1. Transmitting resources of the first CI and the second CI are orthogonal on a time domain. The first CI and the second CI occupy the same PUCCH resource in a sub frame. The second CI is a latest CI fed back by the UE, the reference RS of which is a RS resource in {the first RS resource, a second RS resource} and other than the target RS resource.

In one embodiment,
the first module is further used for receiving an uplink scheduling DCI, wherein the uplink scheduling DCI includes a CSI scheduling bit;
the third module is further used for transmitting an A-CSI on a PUSCH.

Wherein the CSI scheduling bit indicates one of the first RS resource and the second RS resource, a reference RS of the A-CSI is a RS resource indicated by the CSI scheduling bit. The A-CSI includes at least one of {CI, CQI}.

In one embodiment,
the third module is used for feeding back a first CQI and a third CI. Wherein the first CQI is determined under a condition that the UE assumes that a PMI value corresponding to the CI in a reported CI set is adopted by the base station, and a reference RS of the first CQI includes the first RS resource and the second RS resource. The reported CI set includes the first CI, the second CI and the third CI. The third CI is determined under a condition that the UE assumes that PMI values corresponding to the first CI and the second CI are adopted by the base station.

The present invention discloses a base station equipment, and the base station equipment includes:

a first module, for transmitting a downlink reference signal in a first RS resource and a second RS resource;

a second module, for receiving a first CI and a first index;

a third module, for determining a downlink channel parameter;

wherein the first RS resource includes N1 RS ports, the second RS resource includes N2 RS ports, N1 is a positive integer greater than 1, and N2 is a positive integer greater than 1. A reference RS of the first CI is the target RS resource, the target RS resource is the first RS resource or the second RS resource, and the first index indicates the target RS resource. Transmitting resources of the first CI and the second CI are orthogonal on a time domain. The first CI and the second CI occupy the same PUCCH resource in a sub frame. The second CI is a latest CI fed back by the transmitting UE, the reference RS of which is a RS resource in {the first RS resource, a second RS resource} and other than the target RS resource.

In one embodiment,
the first module is further used for transmitting an uplink scheduling DCI, wherein the uplink scheduling DCI includes a CSI scheduling bit;
the second module is further used for receiving an A-CSI on a PUSCH.

Wherein the CSI scheduling bit indicates one of the first RS resource and the second RS resource, a reference RS of the A-CSI is a RS resource indicated by the CSI scheduling bit. The A-CSI includes at least one of {CI, CQI}.

In one embodiment, the second module is used for feeding back a first CQI and a third CI. Wherein the first CQI is determined under a condition that a transmitting UE assumes that a PMI value corresponding to the CI in a reported CI set is adopted by the base station, and a reference RS of the first CQI includes the first RS resource and the second RS resource. The reported CI set includes the first CI, the second CI and the third CI. The third CI is determined under a condition that the UE assumes that PMI values corresponding to the first CI and the second CI are adopted by the base station.

For a problem that the CSI fed back by the UE occupies excessive air-interface overheads in the FD MIMO system, the present invention discloses a method and a device for feedbacking the CSI. According to the method of the present invention, the UE selects one RS resource from two RS resource with primary and secondary relationship to serve as the reference RS, and the UE obtains and feeds back the CI according to the reference RS. By using the method of the present invention, the UE feeds back the most effective CI information by using limited air-interface resources, and therefore overheads of the air-interface resources are reduced or the feedback efficiency of the CI is improved.

## BRIEF DESCRIPTION OF THE DRAWINGS

The above and other exemplary aspects, features and advantages of certain exemplary embodiments of the present invention will be more apparent from the following description taken in conjunction with the accompanying drawings, in which:

FIG. 1 is an example of a downlink RS pattern of the existing LTE system;

FIG. 2 is a flowchart of a CSI feedback according to one embodiment of the present invention;

FIG. 3 is a pattern of a first RS resource and a second RS resource inside PRBP according to one embodiment of the present invention;

FIG. 4 is a mapping diagram of a 4X4 cross polarized antenna array disposed on a base station side to a RS port according to one embodiment of the present invention;

FIG. 5 is a mapping diagram of a 4X8 cross polarized antenna array disposed on a base station side to a RS port according to one embodiment of the present invention;

FIG. 6 is a structure diagram illustrating a processing apparatus used in a UE according to one embodiment of the present invention;

FIG. 7 is a structure diagram illustrating a processing apparatus used in a base station according to one embodiment of the present invention.

## DETAILED DESCRIPTION

The following description with reference to the accompanying drawings is provided to explain the exemplary embodiments of the invention. Note that in the case of no conflict, the embodiments of the present invention and the features of the embodiments may be arbitrarily combined with each other.

Embodiment I

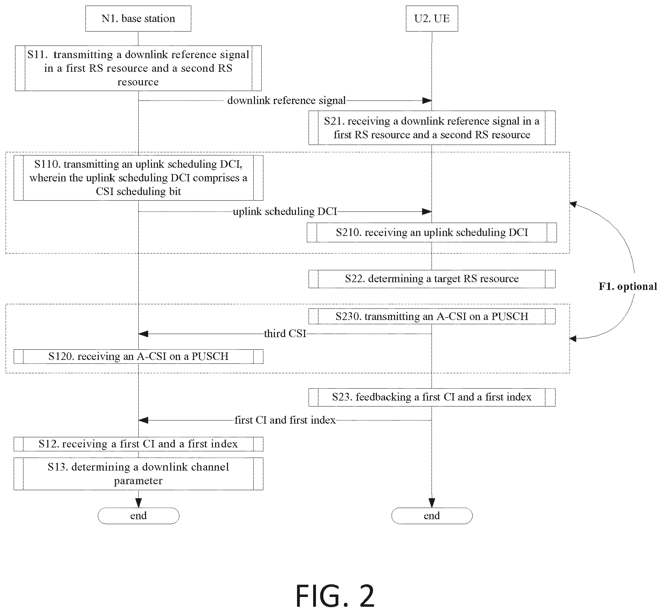

Embodiment I illustrates a flowchart of a CSI feedback, as shown in FIG. 2. In FIG. 2, a cell maintained by a base station N1 is a serving cell of a UE U2. In FIG. 2, the step in a square frame identified by F1 is an optional step.

For the base station N1, in step S11, the method involves transmitting a downlink reference signal in a first RS resource and a second RS resource; in step S12, the method involves receiving a first CI and a first index; in step S13, the method involves determining a downlink channel parameter.

For the UE U2, in step S21, the method involves receiving a downlink reference signal in a first RS resource and a second RS resource; in step S22, the method involves determining a target RS resource, wherein the target RS resource is the first RS resource or the second RS resource; in step S23, the method involves feeding back a first CI and a first index.

In Embodiment I, the first RS resource includes N1 RS ports, the second RS resource includes N2 RS ports, N1 is a positive integer greater than 1, and N2 is a positive integer greater than 1. A reference RS of the first CI is the target RS resource, the target RS resource is the first RS resource or the second RS resource, and the first index indicates the target RS resource.

In a first exemplary embodiment of Embodiment I, the base station N1 transmits an uplink scheduling DCI in step S110; receives an A-CSI on a PUSCH. The UE U2 receives an uplink scheduling DCI in step S210; transmits an A-CSI on a PUSCH. Wherein the uplink scheduling DCI includes a CSI scheduling bit, the CSI scheduling bit indicates one of the first RS resource and the second RS resource, and a reference RS of the A-CSI is a RS resource indicated by the CSI scheduling bit. The A-CSI includes at least one of {CI, CQI}.

In a second exemplary embodiment of Embodiment I, transmitting resources of the first CI and the second CI are orthogonal on a time domain. The first CI and the second CI occupy the same PUCCH resource in a sub frame. The second CI is a latest CI fed back by the UE U2, the reference RS of which is a RS resource in {the first RS resource, a second RS resource} and other than the target RS resource.

In a third exemplary embodiment of Embodiment I, the first index is one bit, and the first index identifies that the target RS resource is the first RS resource or the second RS resource.

In a fourth exemplary embodiment of Embodiment I, a pattern of the RS port inside a PRBP is a pattern of a CSI-RS port inside the PRBP.

In a fifth exemplary embodiment of Embodiment I, the UE U2 feeds back a first CQI in the step S23, and the base station N1 receives a fist CQI in the step S23. Wherein the first CQI is calculated out under a condition that the UE U2 assumes that a PMI value corresponding to the CI in a reported CI set is adopted by the base station N1, and a reference RS of the first CQI includes the first RS resource and the second RS resource. The reported CI set includes the first CI and a second CI. The second CI is a latest CI fed back by the UE U2, the reference RS of which is a RS resource in {the first RS resource, the second RS resource} and other than the target RS resource.

Embodiment II

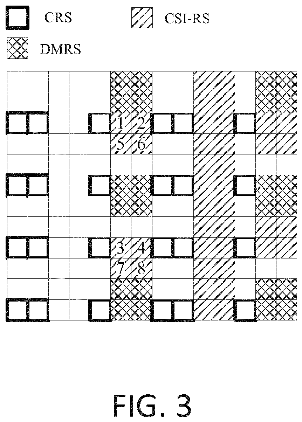

Embodiment II is a pattern of a first RS resource and a second RS resource inside a PRBP, as shown in FIG. 3, wherein RE identified by a number X corresponds to a RS port x - two Res on the same sub carrier adjacent time domain adopt OCC (orthogonal covering code). In FIG. 3, the first RS resource and the second RS resource occupy CSI-RS resources in the LTE, as shown by a square identified by a slash in FIG. 3.

In Embodiment II, the first RS resource includes RS ports {1, 2, 3, 4}, and the second RS resource includes RS ports {5, 6, 7, 8}. The first RS resource and the second RS resource respectively occupy a time, frequency and code domain resource of one set of four CSI-RS ports.

Embodiment III

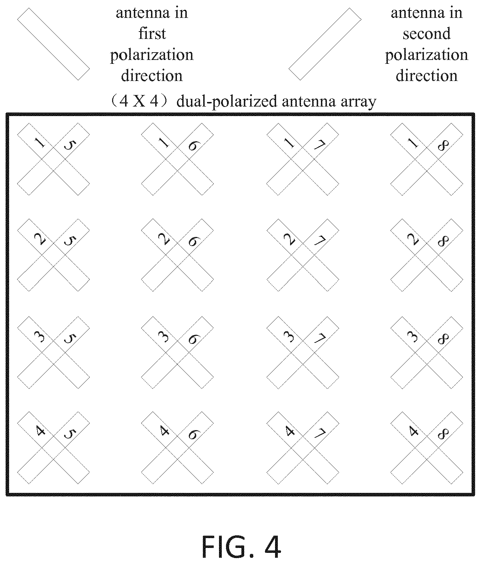

Embodiment III is a mapping diagram of a 4X4 cross polarized antenna array disposed on a base station side to a RS port, as shown in FIG. 4. In FIG. 4, a small square indicates a physical antenna, and a number therein indicates a RS port index corresponding to the physical antenna.

As shown in FIG. 4, four transmitting antennas in a first polarization direction of the same row are mapped to the same RS port by adopting a pre-coding manner (i.e. the four transmitting antennas respectively send signals of RS sequence of the same RS port through a phase rotation, and one virtual antenna is formed on a UE side). Similarly, four transmitting antennas in a second polarization direction of the same column are mapped to the same port by adopting a pre-coding manner.

In Embodiment, firstly, the base station transmits a downlink reference signal to a UE in a first RS resource and a second RS resource; then, the UE determines a target RS resource, wherein the target RS resource is the first RS resource or the second RS resource; the UE feeds back a first CI, a third CI, a first index and a first CQI to the base station; finally, the base station determines a downlink channel parameter.

In Embodiment, the first RS resource includes RS ports {1, 2, 3, 4} and the second RS resource includes RS ports {5, 6, 7, 8}. A reference RS of the first CI is the target RS resource, the target RS resource is the first RS resource or the second RS resource, and the first index indicates the target RS resource. The first CQI is calculated out under a condition that the UE U2 assumes that a PMI value corresponding to the CI in a reported CI set is adopted by a base station, and a reference RS of the first CQI includes the first RS resource and the second RS resource. The reported CI set includes {the first CI, a second CI, a third CI}. The second CI is a latest CI fed back by the UE, the reference RS of which is a RS resource in {the first RS resource, the second RS resource} and other than the target RS resource.

In a first exemplary embodiment of Embodiment III, a codebook space of the first CI is a codebook space corresponding a first PMI of 8Tx in the LTE, and a PMI value corresponding to the first CI is $w^1_{4 \times b_1}$; a codebook space of the second CI is a codebook space corresponding a first PMI of 8Tx in the LTE, and a PMI value corresponding to second CI is $w^2_{4 \times b_2}$; a codebook space of the third CI is a codebook space of 2Tx in the LTE, and a PMI value corresponding to third CI is $w^3_{2 \times b_3}$. Firstly, the base station uses a Kronecker product calculation to obtain a pre-coding matrix

$$W_{32 \times (b_1 b_2 b_3)} = w^3_{2 \times b_3} \otimes \left( w^1_{4 \times b_1} \otimes w^2_{4 \times b_2} \right)$$ of

two dimension array antenna, wherein $W_{32 \times (b_1 b_2 b_3)}$ reflects the phase information of the downlink channel from thirty-two antenna to the UE, the base station uses a first CQI lookup table to determine a margin $a$ of the downlink channel, and the base station finally determine the downlink channel as $a \cdot W_{32 \times (b_1 b_2 b_3)}$.

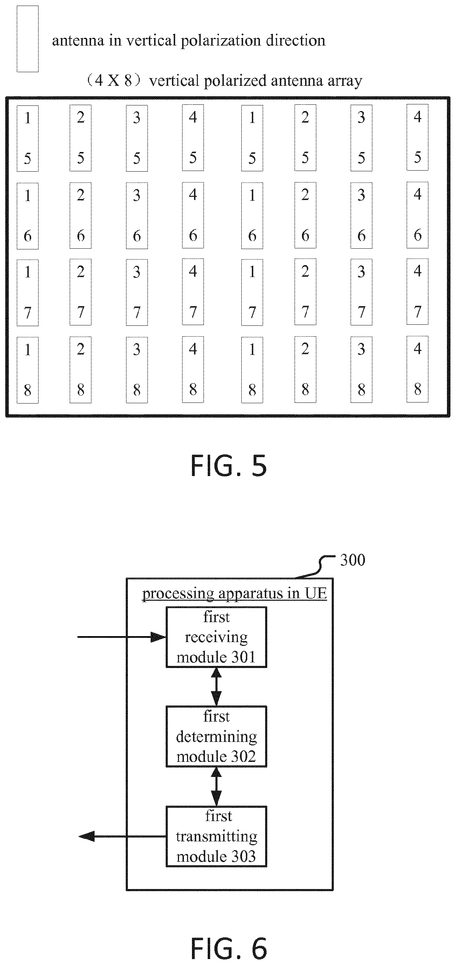

Embodiment IV is a mapping diagram of a 4X8 cross polarized antenna array disposed on a base station side to a RS port, as shown in FIG. 5. In FIG. 5, a small square indicates a physical antenna, and a number therein indicates a RS port index corresponding the physical antenna (one physical antenna transmits a RS sequence of two ports).

As shown in FIG. 5, four transmitting antennas in the same column are mapped to the same RS port by adopting a pre-coding manner - RS ports {1-4}. Similarly, four transmitting antennas in the same row are mapped to the same RS port by adopting a pre-coding manner - RS port {5-8}.

Firstly, the base station transmits a downlink reference signal to a UE in a first RS resource and a second RS resource; the UE determines a target RS resource, wherein the target RS resource is the first RS resource or the second RS resource; the UE feeds back a first CI, a first index and a first CQI to the base station; the base station finally determines a downlink channel parameter.

In Embodiment IV, the first RS resource includes RS ports {1, 2, 3, 4} and the second RS resource includes RS ports {5, 6, 7, 8}. A reference RS of the first CI is the target RS resource, the target RS resource is the first RS resource or the second RS resource, and the first index indicates the target RS resource. The first CQI is calculated out under a condition that the UE U2 assumes that a PMI value corresponding to the CI in a reported CI set is adopted by a base station, and a reference RS of the first CQI includes the first RS resource and the second RS resource. The reported CI set includes {the first CI, a second CI}. The second CI is a latest CI fed back by the UE, the reference RS of which is a RS resource in {the first RS resource, the second RS resource} and other than the target RS resource.

In a first exemplary embodiment of Embodiment IV, a codebook space of the first CI is a codebook space corresponding of 8Tx in the LTE; a codebook space of the second CI is a codebook space of 4Tx in the LTE.

Embodiment V

Embodiment V is a structure diagram illustrating a processing apparatus used in a UE, as shown in FIG. 6. In FIG. 6, the processing apparatus 300 in the UE mainly includes a first receiving module 301, a first determining module 302, and a first transmitting module 303.

The first receiving module 301 is used for receiving a downlink reference signal in a first RS resource and a second RS resource; the first determining module 302 is used for determining a target RS resource, wherein the target RS resource is the first RS resource or the second RS resource; the first transmitting module 303 is used for feeding back a first CI and a first index.

In Embodiment V, the first RS resource includes N1 RS ports, the second RS resource includes N2 RS ports, a reference RS of the first CI is the target RS resource, the first index indicates the target RS resource, N1 is a positive integer greater than 1, and N2 is a positive integer greater than 1. Transmitting resources of the first CI and the second CI are orthogonal on a time domain. The first CI and the second CI occupy the same PUCCH resource in a sub frame. The second CI is a latest CI fed back by the UE, the reference RS of which is a RS resource in {the first RS resource, a second RS resource} and other than the target RS resource.

In a first exemplary embodiment of Embodiment V, a sum of the N1 and the N2 does not exceed eight.

In a second exemplary embodiment of Embodiment V, a codebook space of the first CI is a codebook space corresponding to a first PMI of 8Tx in the LTE or a codebook space of 4Tx in the LTE, and a codebook space of the second CI is a codebook space corresponding to a first PMI of 8Tx in the LTE or a codebook space of 4Tx in the LTE.

In a third exemplary embodiment of Embodiment V, the receiving module 301 is further used for receiving an uplink scheduling DCI, wherein the uplink scheduling DCI includes a CSI scheduling bit; the transmitting module 303 is further used for transmitting an A-CSI on a PUSCH. Wherein the CSI scheduling bit indicates one of the first RS resource and the second RS resource, a reference RS of the A-CSI is a RS resource indicated by the CSI scheduling bit; the A-CSI includes at least one of {CI, CQI}.

Embodiment VI

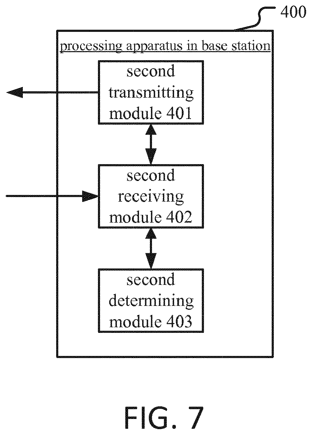

Embodiment VI is a structure diagram illustrating a processing apparatus used in a base station (eNB), as shown in FIG. 7. In FIG. 7, the processing apparatus 400 in the eNB mainly includes a second transmitting module 401, a second receiving module 402 and a second determining module 403.

The second transmitting module 401 is used for transmitting a downlink reference signal in a first RS resource and a second RS resource; the second receiving module 402 is used for receiving a first CI and a first index; the second determining module 403 is used for determining a downlink channel parameter.

In Embodiment VI, the first RS resource includes N1 RS ports, the second RS resource includes N2 RS ports, N1 is a positive integer greater than 1, and N2 is a positive integer greater than 1. A reference RS of the first CI is the target RS resource, the target RS resource is the first RS resource or the second RS resource, and the first index indicates the target RS resource. Transmitting resources of the first CI and the second CI are orthogonal on a time domain. The first CI and the second CI occupy the same PUCCH resource in a sub frame. The second CI is a latest CI fed back by the transmitting UE, the reference RS of which is a RS resource in {the first RS resource, a second RS resource} and other than the target RS resource.

In a first exemplary embodiment of Embodiment VI, the N1 is one of {1, 2, 4, 8} and the N2 is one of {1, 2, 4, 8}. The first RS resource occupies a time, frequency and code domain resource of one set of N1 CSI-RS ports, and the second RS resource occupies a time, frequency and code domain resource of one set of N2 CSI-RS ports.

In a second exemplary embodiment of Embodiment VI, a codebook space of the first CI is a codebook space corresponding to a first PMI of 8Tx in the LTE or a codebook space of 4Tx in the LTE, and a codebook space of the second CI is a codebook space corresponding to a first PMI of 8Tx in the LTE or a codebook space of 4Tx in the LTE.

In a third exemplary embodiment of Embodiment VI, the second transmitting module 401 is further used for transmitting an uplink scheduling DCI, wherein the uplink scheduling DCI includes a CSI scheduling bit; the second receiving module 402 is further used for receiving an A-CSI on a PUSCH. Wherein the CSI scheduling bit indicates one of the first RS resource and the second RS resource, a reference RS of the A-CSI is a RS resource indicated by the CSI scheduling bit; the A-CSI includes at least one of {CI, CQI}.

Those of ordinary skill will be appreciated that all or part of the above method may be accomplished by a program instructing related hardware. The program may be stored in a computer-readable storage medium, such as read-only memory, a hard disk or CD-ROM. Alternatively, all or part of the steps of the above-described embodiments may be accomplished by one or more integrated circuits. Accordingly, each module in the above-described embodiments may be accomplished by hardware implementation, or may also be realized by the form of software modules. The present invention is not limited to any particular form of combination of software and hardware.

Although the present invention is illustrated and described with reference to specific embodiments, those skilled in the art will understand that many variations and modifications are readily attainable without departing from the spirit and scope thereof as defined by the appended claims and their legal equivalents.

**Claims**

1. A method for 3D MIMO communication in a UE, comprising the following steps:

   Step A: receiving a downlink reference signal in a first RS resource and a second RS resource;
   Step B: determining a target RS resource, wherein the target RS resource is the first RS resource or the second RS resource;
   Step C: feeding back a first CI and a first index;

   wherein the first RS resource comprises N1 RS ports, the second RS resource comprises N2 RS ports, a reference RS of the first CI is the target RS resource, the first index indicates the target RS resource, N1 is a positive integer greater than 1, and N2 is a positive integer greater than 1.

2. The method for 3D MIMO communication in the UE according to claim 1, which is **characterized in that**, the Step C comprises the following step:

   Step C0: feeding back a first CQI;

   wherein the first CQI is determined under a condition that the UE assumes that a PMI value corresponding to the CI in a reported CI set is adopted by a base station, and a reference RS of the first CQI comprises the first RS resource and the second RS resource; the reported CI set comprises the first CI and a second CI; the second CI is a latest CI fed back by the UE, the reference RS of which is a RS resource in {the first RS resource, the second RS resource} and other than the target RS resource.

3. The method for 3D MIMO communication in the UE according to claim 1, which is **characterized in that**, the Step A comprises the following step:

   Step A1: receiving an uplink scheduling DCI, wherein the uplink scheduling DCI comprises a CSI scheduling bit;

   the Step C further comprises the following step:

   Step C1: transmitting an A-CSI on a PUSCH;

   wherein the CSI scheduling bit indicates one of the first RS resource and the second RS resource, a reference RS of the A-CSI is a RS resource indicated by the CSI scheduling bit; the A-CSI comprises at least one of {CI, CQI}.

4. The method for 3D MIMO communication in the UE according to claim 2, which is **characterized in that**, the Step C further comprises the following step:

   Step C2: feeding back a third CI;

   wherein the reported CI set comprises the third CI, and the third CI is determined under a condition that the UE assumes that PMI values corresponding to the first CI and the second CI are adopted by the base station.

5. The method for 3D MIMO communication in the UE according to any one of claims 1-4, **characterized in that**, transmitting resources of the first CI and the second CI are orthogonal on a time domain; the first CI and the second CI occupy the same PUCCH resource in a sub frame; the second CI is a latest CI fed back by the UE, the reference RS of which is a RS resource in {the first RS resource, a second RS resource} and other than the target RS resource.

6. The method for 3D MIMO communication in the UE according to any one of claims 1-4, which is **characterized in that**, the first index is one bit, and the first index identifies that the target RS resource is the first RS resource or the second RS resource.

7. The method for 3D MIMO communication in the UE according to any one of claims 1-4, which is **characterized in that**, a pattern of the RS port inside a PRBP is a pattern of a CSI-RS port inside the PRBP.

8. A method for 3D MIMO communication in a base station, comprising the following steps:

   Step A: transmitting a downlink reference signal in a first RS resource and a second RS resource;
   Step B: receiving a first CI and a first index;
   Step C: determining a downlink channel parameter;

   wherein the first RS resource comprises N1 RS ports, the second RS resource comprises N2 RS ports, N1 is a positive integer greater than 1, and N2 is a positive integer greater than 1; a reference RS of the first CI is the target RS resource, the target RS resource is the first RS resource or the second RS resource, and the first index indicates the target RS resource.

9. The method for 3D MIMO communication in the base station according to claim 8, which is **characterized**

**in that**, the Step B comprises the following step:

Step B0: receiving a first CQI;

wherein the first CQI is determined under a condition that a transmitting UE assumes that a PMI value corresponding to the CI in a reported CI set is adopted by the base station, and a reference RS of the first CQI comprises the first RS resource and the second RS resource; the reported CI set comprises the first CI and a second CI; the second CI is a latest CI fed back by the transmitting UE, the reference RS of which is a RS resource in {the first RS resource, the second RS resource} and other than the target RS resource.

10. The method for 3D MIMO communication in the base station according to claim 8, which is **characterized in that**, the Step A comprises the following step:

Step A1: transmitting an uplink scheduling DCI, wherein the uplink scheduling DCI comprises a CSI scheduling bit;

the Step B further comprises the following step:

Step B1: receiving an A-CSI on a PUSCH;

wherein the CSI scheduling bit indicates one of the first RS resource and the second RS resource, a reference RS of the A-CSI is a RS resource indicated by the CSI scheduling bit; the A-CSI comprises at least one of {CI, CQI}.

11. The method for 3D MIMO communication in the base station according to claim 9, which is **characterized in that**, the Step B further comprises the following step:

Step B 2: receiving a third CI;

wherein the reported CI set comprises the third CI, and the third CI is determined under a condition that the UE assumes that PMI values corresponding to the first CI and the second CI are adopted by the base station.

12. The method for 3D MIMO communication in the base station according to any one of claims 8-11, which is **characterized in that**, transmitting resources of the first CI and the second CI are orthogonal on a time domain; the first CI and the second CI occupy the same PUCCH resource in a sub frame; the second CI is a latest CI fed back by the transmitting UE, the reference RS of which is a RS resource in {the first RS resource, a second RS resource} and other than the target RS resource.

13. The method for 3D MIMO communication in the base station according to any one of claims 8-11, which is **characterized in that**, the first index is one bit, and the first index identifies that the target RS resource is the first RS resource or the second RS resource.

14. The method for 3D MIMO communication in the base station according to any one of claims 8-11, which is **characterized in that**, a pattern of the RS port inside a PRBP is a pattern of a CSI-RS port inside the PRBP.

15. A user equipment, **characterized in that**, the UE comprises:

a first module, for receiving a downlink reference signal in a first RS resource and a second RS resource;
a second module, for determining a target RS resource, wherein the target RS resource is the first RS resource or the second RS resource;
a third module, for feeding back a first CI and a first index;

wherein the first RS resource comprises N1 RS ports, the second RS resource comprises N2 RS ports, a reference RS of the first CI is the target RS resource, the first index indicates the target RS resource, N1 is a positive integer greater than 1, and N2 is a positive integer greater than 1; transmitting resources of the first CI and the second CI are orthogonal on a time domain; the first CI and the second CI occupy the same PUCCH resource in a sub frame; the second CI is a latest CI fed back by the UE, the reference RS of which is a RS resource in {the first RS resource, a second RS resource} and other than the target RS resource.

16. The user equipment according to claim 15, which is **characterized in that**,

the first module is further used for receiving an uplink scheduling DCI, wherein the uplink scheduling DCI comprises a CSI scheduling bit;
the third module is further used for transmitting an A-CSI on a PUSCH;
wherein the CSI scheduling bit indicates one of the first RS resource and the second RS resource, a reference RS of the A-CSI is a RS resource indicated by the CSI scheduling bit; the A-CSI comprises at least one of {CI, CQI}.

17. A base station equipment, **characterized in that**, the base station equipment comprises:

a first module, for transmitting a downlink reference signal in a first RS resource and a second RS resource;
a second module, for receiving a first CI and a first index;
a third module, for determining a downlink channel parameter;

wherein the first RS resource comprises N1 RS ports, the second RS resource comprises N2 RS ports, N1 is a positive integer greater than 1, and N2 is a positive integer greater than 1; a reference RS of the first CI is the target RS resource, the target RS resource is the first RS resource or the second RS resource, and the first index indicates the target RS resource; transmitting resources of the first CI and the second CI are orthogonal on a time domain; the first CI and the second CI occupy the same PUCCH resource in a sub frame; the second CI is a latest CI fed back by the transmitting UE, the reference RS of which is a RS resource in {the first RS resource, a second RS resource} and other than the target RS resource.

18. The base station according to claim 17, which is **characterized in that**,

the first module is further used for transmitting an uplink scheduling DCI, wherein the uplink scheduling DCI comprises a CSI scheduling bit;
the second module is further used for receiving an A-CSI on a PUSCH;
wherein the CSI scheduling bit indicates one of the first RS resource and the second RS resource, a reference RS of the A-CSI is a RS resource indicated by the CSI scheduling bit; the A-CSI comprises at least one of {CI, CQI}.

FIG. 1

N1. base station

U2. UE

S11. transmitting a downlink reference signal in a first RS resource and a second RS resource

————downlink reference signal————→

S21. receiving a downlink reference signal in a first RS resource and a second RS resource

S110. transmitting an uplink scheduling DCI, wherein the uplink scheduling DCI comprises a CSI scheduling bit

————uplink scheduling DCI————→

S210. receiving an uplink scheduling DCI

S22. determining a target RS resource

**F1. optional**

S230. transmitting an A-CSI on a PUSCH

←————third CSI————

S120. receiving an A-CSI on a PUSCH

S23. feedbacking a first CI and a first index

←————first CI and first index————

S12. receiving a first CI and a first index

S13. determining a downlink channel parameter

( end )

( end )

# FIG. 2

FIG. 3

antenna in
first
polarization
direction

antenna in
second
polarization
direction

（4 X 4） dual-polarized antenna array

FIG. 4

antenna in vertical polarization direction

（4 X 8） vertical polarized antenna array

| | | | | | | | |
|---|---|---|---|---|---|---|---|
| 1 5 | 2 5 | 3 5 | 4 5 | 1 5 | 2 5 | 3 5 | 4 5 |
| 1 6 | 2 6 | 3 6 | 4 6 | 1 6 | 2 6 | 3 6 | 4 6 |
| 1 7 | 2 7 | 3 7 | 4 7 | 1 7 | 2 7 | 3 7 | 4 7 |
| 1 8 | 2 8 | 3 8 | 4 8 | 1 8 | 2 8 | 3 8 | 4 8 |

FIG. 5

300

processing apparatus in UE

first
receiving
module 301

first
determining
module 302

first
transmitting
module 303

FIG. 6

FIG. 7

# INTERNATIONAL SEARCH REPORT

| International application No. |
| --- |
| PCT/CN2015/089686 |

### A. CLASSIFICATION OF SUBJECT MATTER

H04L 1/16 (2006.01) i

According to International Patent Classification (IPC) or to both national classification and IPC

### B. FIELDS SEARCHED

Minimum documentation searched (classification system followed by classification symbols)

H04L; H04Q; H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: RS, resource, mimo, full dimension, FD, CSI, channel status information, PUCCH, codebook index, PUSCH, PMI, precoding matrix indicator, CQI, channel quality indicator

### C. DOCUMENTS CONSIDERED TO BE RELEVANT

| Category* | Citation of document, with indication, where appropriate, of the relevant passages | Relevant to claim No. |
| --- | --- | --- |
| X | WO 2014010994 A1 (LG ELECTRONICS INC.) 16 January 2014 (16.01.2014) description, paragraphs [0008]-[0017], [0051]-[0058], and figure 11 | 1-18 |
| A | CN 103444099 A (LG ELECTRONICS INC.) 11 December 2013 (11.12.2013) the whole document | 1-18 |
| A | US 2014079146 A1 (SAMSUNG ELECTRONICS CO., LTD.) 20 March 2014 (20.03.2014) the whole document | 1-18 |
| A | CN 103477579 A (LG ELECTRONICS INC.) 25 December 2013 (25.12.2013) the whole document | 1-18 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09 November 2015 | 02 December 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer ZHANG, Xingsu Telephone No. (86-10) 62413857 |
| --- | --- |

Form PCT/ISA /210 (second sheet) (July 2009)

**INTERNATIONAL SEARCH REPORT**
Information on patent family members

| | International application No. |
|---|---|
| | PCT/CN2015/089686 |

| Patent Documents referred in the Report | Publication Date | Patent Family | Publication Date |
|---|---|---|---|
| WO 2014010994 A1 | 16 January 2014 | CN 104541460 A | 22 April 2015 |
| | | JP 2015523814 A | 13 August 2015 |
| | | US 2015180628 A1 | 25 June 2015 |
| | | KR 20150054718 A | 20 May 2015 |
| CN 103444099 A | 11 December 2013 | CA 2827075 A1 | 04 October 2012 |
| | | JP 2014512745 A | 22 May 2014 |
| | | EP 2675082 A2 | 18 December 2013 |
| | | US 2013315192 A1 | 28 November 2013 |
| | | KR 20130143105 A | 30 December 2013 |
| | | WO 2012134140 A2 | 04 October 2012 |
| | | JP 2015165691 A | 17 September 2015 |
| US 2014079146 A1 | 20 March 2014 | WO 2014046507 A1 | 27 March 2014 |
| | | KR 20140036923 A | 26 March 2014 |
| | | CN 104641272 A | 20 May 2015 |
| | | EP 2898604 A1 | 29 July 2015 |
| CN 103477579 A | 25 December 2013 | WO 2012141513 A2 | 18 October 2012 |
| | | US 2014036881 A1 | 06 February 2014 |

Form PCT/ISA /210 (patent family annex) (July 2009)